# EUROPÄISCHE PATENTSCHRIFT

(11) **EP 1 609 962 B1**
(45) Veröffentlichungstag und Bekanntmachung des Hinweises auf die Patenterteilung: **14.03.2007**
(21) Anmeldenummer: 05013538.3
(22) Anmeldetag: 23.06.2005
(51) Int. Cl.: F01N 3/08, B01D 53/94

(54) **Abgassystem zur Verbesserung der Wirksamkeit der NOx-Reduktion in Kraftfahrzeugen**
Exhaust system for improving the NOx reduction efficiency in vehicles
Système d'échappement pour améliorer la réduction des NOx de véhicules automobiles

(30) Priorität: 23.06.2004 DE 102004030302
(43) Veröffentlichungstag der Anmeldung: 28.12.2005
(73) Patentinhaber: GM Global Technology Operations, Inc., Detroit, MI 48265-3000 (US); FIAT AUTO S.p.A., 10135 Torino (IT)
(72) Erfinder: Hinrichs, Hans-Georg, 55270 Klein-Winternheim (DE); Mönnig, Ronny, 65183 Wiesbaden (DE)
(74) Vertreter: Strauss, Peter

(56) Entgegenhaltungen:
- US-A1- 2003 115 860
- US-B1- 6 375 910
- PATENT ABSTRACTS OF JAPAN Bd. 018, Nr. 437 (C-1238), 16. August 1994 (1994-08-16) & JP 06 134258 A (HITACHI LTD; others: 01), 17. Mai 1994 (1994-05-17)
- PATENT ABSTRACTS OF JAPAN Bd. 018, Nr. 279 (M-1612), 27. Mai 1994 (1994-05-27) & JP 06 050132 A (TOYOTA MOTOR CORP), 22. Februar 1994 (1994-02-22)

## Beschreibung

Die Erfindung betrifft ein Abgassystem zur Verbesserung der Wirksamkeit der NOx-Reduktion in Kraftfahrzeugen.

Die Gesetzgebung sieht zukünftig eine drastische Absenkung der Schadstoffgrenzwerte, bereits in der Richtlinie EU IV, vor.

Gleichzeitig ist bei modernen Kraftfahrzeugen auf Basis von Dieselmotoren auch ein Einsatz von Russpartikelfiltern vorgesehen. Dieses Filter muss jedoch von Zeit zu Zeit regeneriert werden (sog. DPF-Regeneration), um auch auf längere Zeit eine effektive Russfilterung ohne merklichen Staudruckanstieg und damit verknüpften Leistungs- und Verbrauchsnachteil zu gewährleisten.

Es stellt sich daher die Aufgabe, ein Abgassystem zu schaffen, welches sowohl unter Standardbedingungen (normaler Fahrbetrieb ohne besondere Motorkalibrierung) wie auch unter DPF-Regenerationsbedingungen eine effektive NOx-Reduktion gewährleistet.

Die US 2003/0015860 A1 offenbart ein Abgassystem, welches NOₓ-Absorber mit verschiedenen Temperaturmaxima enthält. Dabei wird ein Ventilsystem zu schaffen, bei dem z.B. je nach der Temperatur verschiedene Kanäle geöffnet oder geschlossen werden. Jedoch wird über die Temperaturmaxima in Verbindung mit der chemischen Natur der NOₓ-Absorber nichts ausgesagt.

Die US 6,375, 910 B1 offenbart eine Multizonen-Katalysatorfalle "multi-zoned catalytic trap" (vgl. Abstract), bei denen je nach Zone Palladium oder andere Edelmetalle als Katalysatoren benutzt werden.

Die JP 0613258A beschreibt Katalysatorsysteme, die auf der HC-Reduktion (Kohlenwasserstoff-Reduktion) von NOₓ beruhen. In Tabelle 1 sind die Temperaturmaxima verschiedener Systeme dargestellt, wobei die Temperaturmaxima über mehrere 100°C variieren.

Jedoch wird in der JP 0613258A kein vanadiumhaltiger Katalysator beschrieben.

Das Dokument JP 06050132 A offenbart mehrere Katalysatorsysteme, die allesamt Platin enthalten (vgl. Fig. 4). Diese Katalysatorsysteme besitzen auch unterschiedliche Temperaturmaxima. Katalysatorsysteme lt. Anspruch 1 werden in der JP 06050132 A nicht beschrieben.

Die Aufgabe wird durch ein Abgassystem mit den Merkmalen des Anspruches 1 gelöst. In den abhängigen Ansprüchen 2 bis 22 sind bevorzugte Weiterbildungen des erfindungsgemäßen Abgassystems angegeben.

Ein erfindungsgemäßes Abgassystem für Brennkraftmaschinen, wobei die Brennkraftmaschine mit Luftüberschuss betrieben wird, ist dadurch charakterisiert, dass das Abgassystem sowohl in einem Temperaturbereich, der zur Reduktion von NOx unter Normalbedingungen geeignet ist, als auch ein einem Temperaturbereich, der zur Reduktion unter DPF-Regenerationsbedingungen geeignet ist, eine Reduktionseffizienz von ≥50% und ≤100% aufweist.

Bevorzugt weist das Abgassystem im wesentlichen über den gesamten Betriebstemperaturbereich von ≥350°C bis ≤550°C eine Reduktionseffizienz von ≥50% und ≤100% auf. "Im wesentlichen" im Sinne dieser Erfindung bedeutet mehr als 50%.

Die Erfinder haben das Problem der Reduktionseffizienz ausführlich studiert und herausgefunden, dass der Bereich um etwa 450°C kritisch bezüglich der Reduktionsmittelselektivität und daher entscheidend ist. Sowohl unterhalb von 450°C - bis 350°C - wie auch oberhalb - bis 550°C muss eine ausreichende Reduktionseffizienz bezüglich NOₓ gewährleistet sein, um den Ansprüchen auf dem Gebiet sowohl bei Normalbetrieb wie auch unter DPF-Regenerationsbedingungen zu genügen.

Bei derzeitigen Systemen erfolgt die selbständige thermische Umsetzung von Rußpartikeln zu CO₂ vorzugsweise in einem Temperaturfenster oberhalb von 450 °C, etwa ca. 500-550°C.

In diesem Zusammenhang hat sich allerdings gezeigt, dass gebräuchliche mit Ammoniak betriebene SCR-Katalysatoren ihre Reduktionsleistung dann verlieren, wenn die Abgastemperatur die oben bezeichnete Temperatur übersteigt.

Vielmehr besteht sogar die Gefahr, dass das zugegebene Reduktionsmittel(NH3₎ zu zusätzlichem (nicht-motorischem) NOₓ umgesetzt wird. Diesem kann zwar durch eine Kühlung des Katalysators entgegengewirkt werden. Jedoch ist die dafür benötigte Kühlleistung bei den meisten Anwendungen viel zu hoch, so dass ein effizientes Betreiben eines solchen Verfahrens im Kraftfahrzeug nicht sinnvoll ist und somit von vornherein ausscheidet.

Auf der anderen Seite muss ein Abgassystem auch in einem Temperaturbereich, der zur Reduktion von NOx unter Normalbedingungen geeignet ist, eine hohe Reduktionseffizienz haben. Dieser Temperaturbereich ist üblicherweise unterhalb von 450°C anzusiedeln.

Ein Abgassystem gemäß der vorliegenden Erfindung ist somit in der Lage, eine effiziente Reduktion von NOₓ sowohl in einem Temperaturbereich, der zur Reduktion von Nox unter Normalbedingungen geeignet ist, als auch ein einem Temperaturbereich, der zur Reduktion unter DPF-Regeneration geeignet ist, zu leisten.

Bevorzugt weist das Abgassystem im wesentlichen über den gesamten Betriebstemperaturbereich von ≥350°C bis ≤550°C eine Reduktionseffizienz von ≥70% und ≤100%, mehr bevorzugt ≥80% und ≤100%, noch bevorzugt ≥90% und ≤100%, sowie am meisten bevorzugt ≥95% und ≤100% auf. Eine höhere Reduktionseffizienz bewirkt eine geringere NOₓ-Emmission.

Bevorzugt weist das Abgassystem im wesentlichen über den gesamten Betriebstemperaturbereich von ≥300°C bis ≤600°C, noch mehr bevorzugt ≥250°C bis ≤650°C, sowie am meisten bevorzugt ≥200°C bis ≤700°C eine Reduktionseffizienz von ≥50% und ≤100%, bevorzugt ≥70% und ≤100%, mehr bevorzugt ≥80% und ≤100%, noch bevorzugt ≥90% und ≤100%, sowie am meisten bevorzugt ≥95% und ≤100% auf. Somit wird auch bei höheren und niedrigeren Temperaturen eine effiziente Reduktion gewährleistet.

Bevorzugt weist das Abgassystem über den gesamten Betriebstemperaturbereich von ≥350°C bis ≤550°C eine Reduktionseffizienz von ≥50% und ≤100%, noch bevorzugt ≥70% und ≤100%, mehr bevorzugt ≥80% und ≤100%, noch bevorzugt ≥90% und ≤100%, sowie am meisten bevorzugt ≥95% und ≤100% auf. Somit kann die Reduktionseffizienz noch weiter erhöht werden.

Bevorzugt weist das Abgassystem über den gesamten Betriebstemperaturbereich von ≥300°C bis ≤600°C, noch mehr bevorzugt ≥250°C bis ≤650°C, sowie am meisten bevorzugt ≥200°C bis ≤700°C eine Reduktionseffizienz von ≥70% und ≤100% , bevorzugt ≥80% und ≤100%, noch bevorzugt ≥90% und ≤100%, sowie am meisten bevorzugt ≥95% und ≤100% auf. Dies bewirkt eine effiziente Reduktion über einen weiten Temperaturbereich.

Eine bevorzugte Ausführungsform des erfindungsgemäßen Abgassystems ist dadurch gekennzeichnet, dass es mehr als einen Katalysator und/oder katalytisch aktive Bereiche aufweist. Hierbei können unterschiedliche Materialien und Beschichtungen Einsatz finden.

Eine bevorzugte Ausführungsform des erfindungsgemäßen Abgassystems ist dadurch gekennzeichnet, dass die Katalysatoren und/oder katalytisch aktiven Bereiche unterschiedliche Temperaturoptima aufweisen.

Eine bevorzugte Ausführungsform des erfindungsgemäßen Abgassystems ist dadurch gekennzeichnet, dass das Abgassystem mindestens einen Katalysator und/oder einen katalytisch aktiven Bereich, welcher ein niedriges Temperaturoptimum besitzt, sowie mindestens einen Katalysator und/oder einen katalytisch aktiven Bereich, welcher ein hohes Temperaturoptimum besitzt, enthält.

Eine bevorzugte Ausführungsform des erfindungsgemäßen Abgassystems ist dadurch gekennzeichnet, dass das Abgassystem mindestens einen Katalysator und/oder einen katalytisch aktiven Bereich, welcher Temperaturoptimum von ≥200°C bis ≤600°C besitzt, enthält.

Eine bevorzugte Ausführungsform des erfindungsgemäßen Abgassystems ist dadurch gekennzeichnet, dass das Abgassystem mindestens einen Katalysator und/oder einen katalytisch aktiven Bereich, welcher Temperaturoptimum von ≥400°C bis ≤800°C besitzt, enthält.

Eine bevorzugte Ausführungsform des erfindungsgemäßen Abgassystems ist dadurch gekennzeichnet, dass das Abgassystem eine Steuereinheit enthält, die abhängig von einer physikalischen Größe des Abgassystems und/oder des Kraftfahrzeugs den unterschiedlichen Katalysatoren und/oder katalytisch aktiven Bereichen des Abgassystems unterschiedliche Abgasmengen zuführt.

Die physikalische Größe des Abgassystems und/oder des Kraftfahrzeuges kann die Temperatur, die Abgasmenge, der Betriebszustand des Motors etc. sein.

Unter der Bezeichnung "physikalische Größe" wird jedoch im Sinne dieser Erfindung insbesondere auch die Zeit verstanden. Eine mögliche Steuereinheit im Sinne der vorliegenden Erfindung ist somit z.B. eine Zeitschaltung, die - im Fall einer DPF-Regeneration - für eine bestimmte Zeit (evtl. auch verbunden mit einer Temperaturerhöhung des Abgases) ein Katalysatorsystem bzw. einen katalytisch aktiven Bereich ansteuert, sowie nach einer bestimmten Zeitperiode ein anderes Katalysatorsystem bzw. einen anderen katalytisch aktiven Bereich aktiviert. Eine Steuereinheit im Sinne der vorliegenden Erfindung kann jedoch auch eine Einrichtung sein, die zyklisch, unabhängig vom Zustand der Russfilter des Kraftfahrzeuges, bestimmte Katalysatoren bzw. katalytisch aktive Bereiche ansteuert oder mit unterschiedlichen Abgasmengen versorgt.

Eine bevorzugte Ausführungsform des erfindungsgemäßen Abgassystems ist dadurch gekennzeichnet, dass das Abgassystem eine Steuereinheit zur Bereichsumschaltung und/oder zur Reduktionsmittelanwahl und -dosierung enthält oder umfasst, die abhängig von der Temperatur des Abgases und/oder der Betriebsweise des Motors (Kaltstart, Warmlaufphase, Teil- oder Volllast, mit oder ohne späte Nacheinspritzung) den unterschiedlichen Katalysatoren und/oder katalytisch aktiven Bereichen des Abgassystems unterschiedliche Abgasmengen, die ggf. mit verschiedenen Reduktionsmitteln in variablen Mengen beaufschlagt wurden, zuführt. Dies kann entweder kontinuierlich erfolgen, oder ab einer bestimmten Temperatur wird z.B. von einem Katalysator auf einen anderen gewechselt, etwa dadurch, dass die Abgasströme umgelenkt werden.
Auch kann der aktuelle Brennverlauf des Motors zur Steuerung der Abgasanlage hinzugezogen werden, in dem über Sensoren abgasrelevante Daten ermittelt und in die Steuereinheit eingespeist werden. Diese Messanordnung kann eine oder mehrere Lambda-, NOₓ- oder NH₃-Sensoren umfassen, die eine closed-loop Verarbeitung mit reglungstechnischen Algorithmen erlaubt, was einerseits die Anlagensicherheit verbessert und andererseits den Reduktionsmittelbedarf durch optimale Dosierung minimiert.

Eine bevorzugte Ausführungsform des erfindungsgemäßen Abgassystems ist dadurch gekennzeichnet, dass das Abgassystem mindestens einen Katalysator und/oder einen katalytisch aktiven Bereich enthält, der die Reduktion von NOₓ zu N_{z} nach dem SCR-Verfahren (Selective Catalytic Reduction) katalysiert.

Eine bevorzugte Ausführungsform des erfindungsgemäßen Abgassystems ist dadurch gekennzeichnet, dass das Abgassystem mindestens einen Katalysator und/oder einen katalytisch aktiven Bereich enthält, der die Reduktion von NOₓ zu N₂ mit NH₃ und/oder NH3-generierenden Substanzen (wie AdBlue; fester Harnstoff etc.), vorzugsweise nach dem NH₃-SCR-Verfahren katalysiert.

Eine bevorzugte Ausführungsform des erfindungsgemäßen Abgassystems ist dadurch gekennzeichnet, dass das Abgassystem mindestens einen Katalysator und/oder einen katalytisch aktiven Bereich aufweist, welcher Vanadium enthält.

Eine bevorzugte Ausführungsform des erfindungsgemäßen Abgassystems ist dadurch gekennzeichnet, dass das Abgassystem mindestens einen Katalysator und/oder einen katalytisch aktiven Bereich aufweist, welcher ≥1 Gew-% bis ≤5 Gew-%, vorzugsweise ≥2 Gew-% bis ≤4 Gew-% Vanadiumoxid enthält.

Eine bevorzugte Ausführungsform des erfindungsgemäßen Abgassystems ist dadurch gekennzeichnet, dass das Abgassystem mindestens einen Katalysator und/oder einen katalytisch aktiven Bereich aufweist, welcher ≥0 Gew-% bis ≤3 Gew-%, vorzugsweise ≥0,1 Gew-% bis ≤1 Gew-% Wolframoxid enthält.

Eine bevorzugte Ausführungsform des erfindungsgemäßen Abgassystems ist dadurch gekennzeichnet, dass das Abgassystem mindestens einen Katalysator und/oder einen katalytisch aktiven Bereich aufweist, welcher eine Zellenzahl (angegeben in cpsi=cells per square inch) von ≥80 bis ≤900 vorzugsweise ≥100 bis ≤400 aufweist.

Eine bevorzugte Ausführungsform des erfindungsgemäßen Abgassystems ist dadurch gekennzeichnet, dass das Abgassystem mindestens einen Katalysator und/oder einen katalytisch aktiven Bereich aufweist, welcher eine Flächengeschwindigkeit (Area velocity; m/h) von ≥25 bis ≤300 vorzugsweise ≥50 bis ≤150 aufweist/bewirkt.

Eine bevorzugte Ausführungsform des erfindungsgemäßen Abgassystems ist dadurch gekennzeichnet, dass das Abgassystem mindestens einen Katalysator und/oder einen katalytisch aktiven Bereich aufweist, welcher einen Monolithen mit einer Länge von ≥50 mm bis ≤300 mm vorzugsweise ≥100 mm bis ≤250 mm aufweist.

Eine bevorzugte Ausführungsform des erfindungsgemäßen Abgassystems ist dadurch gekennzeichnet, dass das Abgassystem mindestens einen Katalysator und/oder einen katalytisch aktiven Bereich aufweist, welcher einen Monolithen mit einer Querschnittsfläche mit einem Durchmesser von ≥4'' bis ≤8'' mm, vorzugsweise ≥5'' bis ≤7'' aufweist.

Eine bevorzugte Ausführungsform des erfindungsgemäßen Abgassystems ist dadurch gekennzeichnet, dass das Abgassystem mindestens einen Katalysator und/oder einen katalytisch aktiven Bereich aufweist, welcher Tonminerale und/oder Zeolithe enthält und/oder auf der Basis von Tonmineral und/oder synthetischen oder natürlich vorkommenden Zeolithen aufgebaut ist. Diese können je nach Anwendung auch mit alternativen Reduktionsmitteln, wie Kraftstoff, reformiertem Kraftstoff, Ethanol oder Acetaldehyd betrieben werden.

"Auf der Basis von Tonmineral und/oder synthetischen oder natürlich vorkommenden Zeolithen" im Sinne der vorliegenden Erfindung bedeutet insbesondere, dass der Katalysator zu ≥30% (Gew%), bevorzugt zu ≥60% (Gew%) sowie am meisten bevorzugt zu ≥80% (Gew%) aus Tonmineralien und/oder synthetischen oder natürlich vorkommenden Zeolithen besteht. Für den Fall, dass der Katalysator Zeolithe und Tonminerale enthält, können diese unter anderem in der selben Phase, als Mischkristallisat oder auch als mechanische Abmischung enthalten sein.

Für den Fall, dass das Abgassystem Zeolithe und Tonminerale enthält, ist der Anteil an Zeolithen bevorzugt ≥10% (Gew%), noch bevorzugt ≥20% (Gew%), noch bevorzugt ≥30% (Gew%), sowie am meisten bevorzugt ≥40% (Gew%), sowie der Anteil an Tonmineralen bevorzugt ≥10% (Gew%), noch bevorzugt ≥20% (Gew%) noch bevorzugt ≥30% (Gew%), sowie am meisten bevorzugt ≥40% (Gew%) des Katalysators und/oder katalytischen Bereichs.

Als eigentliches Reduktionsmittel werden hierzu die im Kraftfahrzeug verfügbaren Kohlenwasserstoffe (direkt oder zuerst "reformiert") und/oder CO und/oder H₂ eingesetzt.

Bentonite als Tonmineral-Katalysatoren für NOₓ sind zum Einsatz in Kraftwerken grundsätzlich aus dem Stand der Technik bekannt, z.B. im US Patent 6 521 559. Jedoch unterscheiden sich zum einen die Bedingungen in einem Kraftwerk grundsätzlich von denen in einem Kraftfahrzeug; zum anderen dient als Reduktionsmittel ausschließlich NH₃ und nicht Kohlenwasserstoffe. Weiterhin ist die Herstellung des genannten Katalysators auf dem synthetischen und gepillarten Mineral Laponite (Laporte, France) basiert, welches im industriellen Maßstab allein aus Kostengründen nicht in ausreichender Menge beziehbar ist. Selbiges gilt für gut pillarfähige Materialien aus Hectorit, Kanemit, Kenyait oder Ilerit.

Eine bevorzugte Ausführungsform eines Abgassystems gemäß der vorliegenden Erfindung ist dadurch gekennzeichnet, dass es einen Katalysator und/oder einen katalytisch aktiven Bereich enthält, welcher oxidative und reduktive Regionen beinhaltet, die je nach Belieben sowohl auf ein und dem selben oder aber auf unterschiedlichen Mineralen (Tonmineral, Zeolith) verwirklicht werden können. Eine besonders effiziente Reduktion von NO kann immer dann geschehen, wenn zunächst ein Teil des NO zu NO₂ (bevorzugt in etwa 25 Mol-%) oxidiert sowie ein anderer Teil von NO mit Hilfe der Kohlenwasserstoffe (über diverse auf dem Kat adsorbierte Zwischenprodukte) zu NH₃ reduziert wird. Anschließend findet eine Rekombination mehrerer auf dem Katalysator adsorbierten Species zu N₂ und Wasser statt.

Bei einem Vorhandensein von Regionen innerhalb des Katalysators und/oder katalytisch aktiven Bereichs, die oxidierend wirken und solche, die zusammen mit den Kohlenwasserstoffen reduzierend wirken, kann somit die Effizienz der NOₓ-Reduktion nachgewiesenermaßen beträchtlich erhöht werden. So ist leicht denkbar, dass in zeolithischen Phasen der Oxidationsschritt NO→NO2 (sogar völlig schwermetallfrei) effektiv katalysiert wird oder dort eine besondere NH3-Speicherfähigkeit ausgenutzt werden kann. Gleiches gilt für zwischenzuspeichernde, aufzukonzentrierende Kohlenwasserstoffe aus dem Motorabgas, die sonst ungenutzt wertvolle Reduktionsmittel darstellen.
Tonminerale selbst bieten ein geräumiges Porensystem (meist zweidimensional zugänglich für Reaktanten), in dem sich die Zwischenschritte NO→NH3 und weiter mit NO2 zu N2, CO2 und Wasser leicht abspielen können.

Unter Tonmineralen werden insbesondere Phyllosilikate, aber auch Band-Silicate [z.B. Palygorskit (Attapulgit) u. Sepiolith (Meerschaum)] verstanden. Eine bevorzugte Ausführungsform eines Katalysators und/oder katalytisch aktiven Bereichs gemäß der vorliegenden Erfindung ist dadurch gekennzeichnet, dass das Tonmineral ausgewählt aus der Gruppe ist, enthaltend Kaolinit, Ilerit, Kanemit, Magadiit, Smektite, Montmorillonit, Bentonit, Hectorit, Palygorskit und Sepiolith sowie Mischungen daraus. Bentonit, Sepiolith, Montmorillonit sowie Ilerit und Hectorit werden für die erfindungsgemässe Anordnung besonders bevorzugt.

Eine bevorzugte Ausführungsform des erfindungsgemäßen Abgassystems ist dadurch gekennzeichnet, dass das Abgassystem mindestens einen Katalysator und/oder einen katalytisch aktiven Bereich aufweist, bei welchem das Tonmineral des Katalysators und/oder katalytisch aktiven Bereichs insbesondere basisch wirkende Kationen, vorzugsweise ausgewählt aus der Gruppe enthaltend Ba, Na, Sr, Ca und Mg sowie Mischungen davon enthält. Insbesondere von Ba²⁺-Ionen ist bekannt, dass diese lokalisiert in geeigneten Tonmineralen Kohlenwasserstoffe binden und in reaktivere, partiell oxidierte Spezies, wie Aldehyde, Ethanol, Essigsäure, umwandeln können, welche dann die NOₓ-Reduktion ermöglichen.

Eine bevorzugte Ausführungsform des erfindungsgemäßen Abgassystems ist dadurch gekennzeichnet, dass das Abgassystem mindestens einen Katalysator und/oder einen katalytisch aktiven Bereich aufweist, bei dem der Katalysator und/oder der katalytisch aktive Bereich oxidativ wirkende Metallionen, vorzugsweise ausgewählt aus der Gruppe enthaltend Ag, Ce, Fe, Cu, La, Pr, Th, Nd, In, Cr, Mn, Co und Ni sowie Mischungen davon enthält und/oder trägt. So kann, nach dem oben geschilderten Mechanismus eine Oxidation von NO zu NO₂ mit noch grösserer Geschwindigkeit (oder bei kleineren Temperaturen) bewirkt werden.

Eine bevorzugte Ausführungsform des erfindungsgemäßen Abgassystems ist dadurch gekennzeichnet, dass das Abgassystem mindestens einen Katalysator und/oder einen katalytisch aktiven Bereich aufweist, bei dem der Katalysator und/oder der katalytisch aktive Bereich auf der Basis von modifiziertem Bentonit aufgebaut ist. Weitere besonders bevorzugte Katalysatoren sind dadurch gekennzeichnet, dass sie modifizierte Tonminerale, ausgewählt aus der Gruppe enthaltend mit Aluminium, Silizium oder Titanium(jeweils als Oxide) gepillarte Bentonite, Smectite, Hectorite oder Ilerite sowie Mischungen davon enthalten.

Eine bevorzugte Ausführungsform des erfindungsgemäßen Abgassystems ist dadurch gekennzeichnet, dass das Abgassystem mindestens einen Katalysator und/oder einen katalytisch aktiven Bereich aufweist, bei dem der Katalysator und/oder der katalytisch aktive Bereich mindestens eine oxidative Region, welche beispielsweise Zeolithe enthält und eine reduktive Region, welche durch Tonminerale gebildet werden kann, beinhaltet. Aufgrund der bekannten Formselektivität der Zeolithe sind diese besonders dazu geeignet, nur das NO zu oxidieren, während die Kohlenwasserstoffe aufgrund ihrer Größe deutlich verzögerter zu den reaktiven Zentren des Zeolithen gelangen können und somit praktisch nicht oxidiert, d.h. verbraucht werden. Tonmineralien dagegen sind aufgrund ihrer im wesentlichen zweidimensionalen Porensysteme zur Absorption von Kohlenwasserstoffen besonders geeignet.

Eine bevorzugte Ausführungsform des erfindungsgemäßen Abgassystems ist dadurch gekennzeichnet, dass das Abgassystem mindestens einen Katalysator und/oder einen katalytisch aktiven Bereich aufweist, bei dem der Katalysator und/oder der katalytisch aktive Bereich ein Zeolith ausgewählt aus der Gruppe enthaltend natürlich vorkommenden, ionenausgetauschten und/oder synthetisierten Zeolith A, Zeolith X, Zeolith Y, Heulandit, Clinoptilolit, Chabasit, Erionit, Mordenit, Ferrierit, MFI (ZSM-5), Zeolith-Beta Faujasit, Mordenit oder Mischungen davon enthält.

Im Rahmen der vorliegenden Erfindung verwendbare Zeolithe können ausserdem ausgewählt sein aus der Gruppe umfassend Zeolith A, Zeolith X, Y und/oder Heulandite. Bevorzugt ist ausserdem der Einsatz von Clinoptilolit, Chabasit, Erionit, Mordenit, Ferrierit, MFI (ZSM-5) sowie Zeolith-Beta. Letztere Zeolithstrukturen sind durch einen geringeren Al-Gehalt gekennzeichnet, was einerseits zwar die Ionenaustauschka.pazität herabsetzt aber andererseits den Vorteil hoher Temperaturfestigkeit (bis 550°C im Dauerbetrieb) bewirkt.

Als besonders geeignete Zeolithe sind Faujasite, Heulandite und Mordenite zu nennen. Zusammen mit den Zeolithen X und Y gehört das Mineral Faujasit zu den Faujasit-Typen innerhalb der Zeolith-Strukturgruppe 4, die durch die Doppelsechsring-Untereinheit D6R gekennzeichnet sind (Vergleiche Donald W.

Breck: "Zeolite Molecular Sieves", John Wiley & Sons, New York, London, Sydney, Toronto, 1974, Seite 92). Zur Zeolith-Strukturgruppe 4 zählen neben den genannten Faujasit-Typen noch die natürlich vorkommenden Mineralien Chabazit und Gmelinit sowie weitere synthetisch erhältliche Zeolithe.

Heulandite haben insbesondere die generelle Formel (Na,K)Ca₄[Al₉Si₂₇O₇₂]·24H₂O bzw. Ca₄[Al₈Si₂₈O₇₂]·24H₂O). Zusammen mit dem SiO₂-reicheren Clinoptilolit sind sie krist. monoklin in der Krist.-Klasse 2/m-C2h und bilden blättrige bis tafelige Krist., vielfach einzeln od. in subparallelen Aggregaten aufgewachsen, auch schalige, blättrige od. spätige Aggregate mit vollkommener Spaltbarkeit mit perlmuttartigem Glanz auf den Spaltflächen (s. dazu auch Gottardi-Galli, Natural Zeolites, S. 256-284).

Mordente besitzen die generelle Struktur Na₃KCa₂[Al₈Si₄₀O₉₆]·28H₂O. Baueinheiten der Kristallstruktur sind Fünferringe von Tetraedern, die übereinanderliegend Ketten bilden. Durch gemeinsame Ecken zweier Tetraeder von Fünferringen werden auch Viererringe gebildet; Vierer- u. Fünferringe umschließen gemeinsam Zwölferringe, s. Abbildung. Mordenit bildet winzige prismat., nadelige od. feinfaserige weiße bis farblose Krist., oft als baumwollartige Aggregate, u. derbe porzellanartige Massen (s.a. Gottardi-Galli, Natural Zeolites, S. 223-233, Berlin-Heidelberg: Springer 1985).

Zeolithe vom Faujasit-Typ sind aus β-Käfigen aufgebaut, die tetrahedral über D6R-Untereinheiten verknüpft sind, wobei die β-Käfige ähnlich den Kohlenstoffatomen im Diamanten angeordnet sind. Das dreidimensionale Netzwerk der erfindungsgemäß geeigneten Zeolithe vom Faujasit-Typ weist Poren von 2,2 und 7,4 Å auf, die Elementarzelle enthält darüber hinaus 8 Kavitäten (Superkäfige) mit ca. 13 Å Durchmesser und läßt sich durch die Formel Na₈₆[(AlO₂)₈₆(SiO₂)₁₀₆] n H₂O beschreiben (n ist bevorzugt 264). (Alle Daten aus: Donald W. Breck: "Zeolite Molecular Sieves", John Wiley & Sons, New York, London, Sydney, Toronto, 1974, Seiten 145, 176, 177).

Auch Abmischungen, Mischkristalle und/oder Co-Kristallisate von Zeolithen des Faujasit-Typs neben anderen Zeolithstrukturen, die nicht zwingend der Zeolith-Strukturgruppe 4 (gemäss der Breck'schen Klassifizierung) angehören müssen, sind (auch in Form mechan. Abmischungen) erfindungsgemäß geeignet, wobei vorzugsweise mindestens 70 Gew.-% der Zeolithe vom Faujasit-Typ, Mordenite und/oder Heulandite enthalten sind.

Die im Rahmen dieser Erfindung verwendeten Zeolithe weisen bevorzugt Porengrößen von 2,8-8,0 Å auf. Generell gilt, dass der genannte Porenradius z.T. beträchtlich mit dem Al-Gehalt der Zeolithe und der Art u. Menge der Co-Kationen für den Ladungsausgleich (Alkali-, Erdalkalimetalle, Nebengruppenelemente) variiert.

Eine bevorzugte Ausführungsform des erfindungsgemäßen Abgassystems ist dadurch gekennzeichnet, dass das Abgassystem mindestens einen Katalysator und/oder einen katalytisch aktiven Bereich aufweist, bei der Anteil an Gew-% Kupfer und/oder Eisen im Katalysator und/oder der katalytisch aktive Bereich, gemessen am Gewicht des gesamten Katalysators und/oder katalytisch aktiven Bereichs zwischen ≥0 Gew-% und ≤25 Gew-%, bevorzugt zwischen ≥0,01 Gew-% und ≤20 Gew-%, mehr bevorzugt zwischen ≥0,05 Gew-% und ≤15 Gew-%, sowie am meisten bevorzugt zwischen ≥0,1 Gew-% und ≤10 Gew-% liegt. Eisen und Kupfer wirken aufgrund ihrer katalytischen Aktivität (Redoxsysteme) nochmals effizienzerhöhend. Weitere geeignete Metalle sind u.a. Silber, Cer, Mangan, Indium und/oder Platin, wobei letzteres weniger bevorzugt ist. Diese verbessern einerseits die hydrothermalen Katalysatoreigenschaften und verbessern weiterhin die Oxidationsleistungsfähigkeit.

Eine bevorzugte Ausführungsform des erfindungsgemäßen Abgassystems ist dadurch gekennzeichnet, dass das Abgassystem mindestens einen Katalysator und/oder einen katalytisch aktiven Bereich aufweist, bei dem der Katalysator und/oder der katalytisch aktive Bereich mit Ausnahme von Kupfer, Eisen sowie ggf. Titanium und/oder Zirkonium schwermetallfrei ist, wobei schwermetallfrei im Sinne der vorliegenden Erfindung bedeutet, dass der Katalysator und/oder katalytisch aktive Bereich weniger als ≤1 Gew-%, bevorzugt weniger als ≤0,8 Gew-%, noch bevorzugt weniger als ≤0,6 Gew-%, noch bevorzugt weniger als ≤0,4 Gew-%, sowie am meisten bevorzugt weniger als als ≤0,1 Gew-% Schwermetalle enthält. Unter Schwermetallen im Sinne der vorliegenden Erfindung werden insbesondere die Platingruppenelemente (auch Edelmetalle) verstanden.

Eine bevorzugte Ausführungsform des erfindungsgemäßen Abgassystems ist dadurch gekennzeichnet, dass das Abgassystem mindestens einen Katalysator und/oder einen katalytisch aktiven Bereich aufweist, bei dem der Katalysator und/oder der katalytisch aktive Bereich zusätzlich noch Metalloxide trägt, wobei das Metall des Metalloxids bis auf gegebenenfalls Kupfer, Eisen, Indium, Molybdän oder Titanium kein Schwermetall ist.

Eine bevorzugte Ausführungsform des erfindungsgemäßen Abgassystems ist dadurch gekennzeichnet, dass das Abgassystem mindestens einen Katalysator und/oder einen katalytisch aktiven Bereich aufweist, bei dem der Katalysator und/oder der katalytisch aktive Bereich noch Aluminiumoxid und/oder Titan- oder Zirconoxid enthält. Dieses wirkt durch den Pillar-prozeß stark oberflächenerhöhend, in dem durch gebildete Nanooxide der Zwischenschichtabstand der Minerale dauerhaft aufgeweitet werden kann, was wiederum die Erzeugung eines permanenten (=unabhängig vom Quellungszustand der Minerale) Porensystems innerhalb des Katalysators ermöglicht. Hierzu wird im Speziellen auf N.D. Hudson et al, Microporous and Mesoporous Materials, 1999, S. 447-459 verwiesen. Ein weiteres bevorzugtes Oxid ist Titanoxid oder Siliziumdioxid, welches ebenfalls zur Oberflächenerhöhung und zur Produktion von "pillared clays" verwendet werden kann.

Eine bevorzugte Ausführungsform des erfindungsgemäßen Abgassystems ist dadurch gekennzeichnet, dass das Abgassystem mindestens einen Katalysator und/oder einen katalytisch aktiven Bereich aufweist, bei dem der Anteil von Metalloxid in mmol pro g Katalysator und/oder der katalytisch aktive Bereich ≤100 mmol Metall/g, noch bevorzugt ≤50 mmol Metall/g, noch ≤20 mmol Metall/g, ≤10 mmol Metall /g sowie am meisten bevorzugt von ≤6 mmol Metall /g bis ≥0 mmol Metall /g, bevorzugt ≥1 mmol Metall /g beträgt.

Eine bevorzugte Ausführungsform des erfindungsgemäßen Abgassystems ist dadurch gekennzeichnet, dass das Abgassystem mindestens einen Katalysator und/oder einen katalytisch aktiven Bereich aufweist, bei dem der Katalysator und/oder der katalytisch aktive Bereich als zusätzliche katalytisch aktive Komponente Kupfer enthält. Das Kupfer übernimmt vermutlich die entscheidende Rolle eines aktiven Zentrums in dem komplexen katalytischen Prozess der NOₓ-Reduzierung sowohl bei NH₃ als Reduktor als auch mit diversen gesättigten und ungesättigten längerkettigen oder kurzkettigen Kohlenwasserstoffen (Aromaten und Methan sind weniger bevorzugt, da recht schwer aktivierbar) .

Diese oder ein ähnliche Rolle kann offenbar auch Eisen, Mangan, Indium, Molybdän und im gewissen Maße auch Titanium einnehmen, welche somit im Rahmen der vorliegenden Erfindung ebenfalls bevorzugt sind. Es wird angenommen, dass diese "Co"-Kationen als Promotoren die Wirksamkeit des Kupfers noch verbessern (möglicherweise in dem sie die Adsorptionsselektivitäten günstig beeinflussen, z.B. gegen Wasser aus dem Abgas oder elektronenübertragend wirken).

Kupferbeladene Zeolithe (wie Cu/ZSM-5) sind, wie oben erwähnt, prinzipiell als aktiver Katalysator in DeNOx-Verfahren schon bekannt, jedoch ist es bisher nicht gelungen, ausreichend stabile Formen für reale Abgasbedingungen (bis 800°C, bis zu 20 Vol.-% Wasser, gleichzeitige Anwesenheit von Schwefelverbindungen) herzustellen. Dabei kommt möglicherweise den Tonmineralien die entscheidende, Co-Kationen aufnehmende und stabilisierende Funktion zu. Hierfür besonders geeignet sind modifizierte Tonminerale (ionenausgetauschte pillared clays, sog. PILC) aber auch natürlich vorkommende Zeolithe, wie Clinoptilolit und/oder Mordenit.

Bevorzugt liegt der Anteil an Gew-% (elementarem) Kupfer im Katalysator und/oder katalytisch aktiven Bereich, gemessen am Gewicht des gesamten Katalysators und/oder katalytisch aktiven Bereichs zwis.chen ≥0,01 % und ≤25%, bevorzugt zwischen ≥0,1 % und ≤20%, mehr bevorzugt zwischen ≥1 % und ≤15%, sowie am meisten bevorzugt zwischen ≥2 % und ≤10%. Diese Angaben gelten auch für das Aktivmetall oder als Co-Kation wirkende Eisen, wobei auch Mischungen beider Metalle positiv getestet wurden. Aktivitätsverbesserungen konnten noch durch Ti- und/oder Ag, Ce-Zusätze und/oder La-Zusätze und/oder Ca, Co, Ni, In, Cr und Mn als Spurmengenzusätze erzielt werden, welche somit ebenfalls bevorzugte Beimengungen darstellen. Im Falle der Tonminerale sind mit Al, Si und/oder mit Ti und/oder Cu, Fe gepillarte und ionenausgetauschte Proben besonders wirksam und insoweit bevorzugt.

Eine bevorzugte Ausführungsform des erfindungsgemäßen Abgassystems ist dadurch gekennzeichnet, dass das Abgassystem mindestens einen Katalysator und/oder einen katalytisch aktiven Bereich aufweist, bei dem im Katalysator und/oder katalytisch aktive Bereich die mikroporöse mittlere Porengrösse zwischen 20 nm und ≤2 nm, bevorzugt zwischen ≥0,1 nm und ≤ 1,0 nm, mehr bevorzugt zwischen ≥0,2 nm und ≤0,8 nm, sowie am meisten bevorzugt zwischen ≥0,21 nm und ≤0,6 nm liegt.

Eine bevorzugte Ausführungsform des erfindungsgemäßen Abgassystems ist dadurch gekennzeichnet, dass das Abgassystem mindestens einen Katalysator und/oder einen katalytisch aktiven Bereich aufweist, bei dem im Katalysator und/oder katalytisch aktive Bereich die mesoporöse mittlere Porengrösse zwischen ≥0 nm und ≤10 nm, bevorzugt zwischen ≥1 nm und ≤ 9 nm, mehr bevorzugt zwischen ≥2 nm und ≤ 8 nm, sowie am meisten bevorzugt zwischen ≥2,5 nm und ≤ 7 nm liegt.

Eine bevorzugte Ausführungsform des erfindungsgemäßen Abgassystems ist dadurch gekennzeichnet, dass das Abgassystem mindestens einen Katalysator und/oder einen katalytisch aktiven Bereich aufweist, bei im der Katalysator und/oder katalytisch aktive Bereich die Oberfläche (gemessen nach der BET-Methode oder im Mehrpunktverfahren) des Tonminerals und/oder Zeolithes, welches die Basis des Katalysators bildet, im Katalysatorprodukt zwischen ≥0 m²/g und ≤1000 m²/g, bevorzugt zwischen ≥20 m²/g und ≤ 800 m²/g, mehr bevorzugt zwischen ≥50 m²/g und ≤600 m²/g, sowie am meisten bevorzugt zwischen ≥ 90 m²/g und ≤450 m²/g liegt.

Eine bevorzugte Ausführungsform des erfindungsgemäßen Abgassystems ist dadurch gekennzeichnet, dass das Abgassystem mindestens einen Katalysator und/oder einen katalytisch aktiven Bereich aufweist, bei dem im Katalysator und/oder katalytisch aktiven Bereich das Mikroporenvolumen des Tonminerals und/oder Zeolithes, welches die Basis des Katalysators bildet, im Katalysatorprodukt zwischen ≥0 cm³/g und ≤0,4 cm³/g, bevorzugt zwischen ≥0,02 cm³/g und ≤ 0,25 cm³/g, mehr bevorzugt zwischen ≥0,04 cm³/g und ≤0,2 cm³/g, sowie am meisten bevorzugt zwischen ≥0,05 cm³/g und ≤0,18 cm³/g liegt.

Eine bevorzugte Ausführungsform des erfindungsgemäßen Abgassystems ist dadurch gekennzeichnet, dass das Abgassystem mindestens einen Katalysator und/oder einen katalytisch aktiven Bereich aufweist, bei dem im Katalysator und/oder katalytisch aktiven Bereich das Mesoporenvolumen des Tonminerals und/oder Zeolithes, welches die Basis des Katalysators bildet, im Katalysatorprodukt zwischen ≥0 cm³/g und ≤1,0 cm³/g, bevorzugt zwischen ≥0,01 cm³/g und ≤ 0,80 cm³/g, mehr bevorzugt zwischen ≥0,015 cm³/g und ≤0,60 cm³/g, sowie am meisten bevorzugt zwischen ≥0,020 cm³/g und ≤0,51 cm³/g liegt.

Eine bevorzugte Ausführungsform des erfindungsgemäßen Abgassystems ist dadurch gekennzeichnet, dass das Abgassystem mindestens einen Katalysator und/oder einen katalytisch aktiven Bereich aufweist, bei dem im Katalysator und/oder katalytisch aktiven Bereich der Zwischenschichtabstand zwischen zwei Schichten des Tonminerals und/oder zeolithartigen Minerals, welches die Basis des Katalysators bildet, im Katalysatorprodukt zwischen ≥0 nm und ≤5 nm, bevorzugt zwischen ≥0,5 nm und ≤3 nm, mehr bevorzugt zwischen ≥1,0 nm und ≤2,5 nm, sowie am meisten bevorzugt zwischen ≥1,4 nm und ≤2,1 nm liegt.

Eine bevorzugte Ausführungsform des erfindungsgemäßen Abgassystems ist dadurch gekennzeichnet, dass das Abgassystem mindestens einen Katalysator und/oder einen katalytisch aktiven Bereich aufweist, bei dem der Katalysator und/oder der katalytisch aktive Bereich eine maximale thermische Belastung im Dauerbetrieb von ≥300°C, bevorzugt von ≥400°C, mehr bevorzugt von ≥500°C, noch bevorzugt von ≥600°C, sowie am meisten bevorzugt von ≥650°C und ≤ 700 °C aufweist.

Der für die Monolithentstehung erforderliche Binder kann ebenfalls auf der bereits beschriebenen Materialienbasis hergestellt sein, in dem hier einfach auf die Dotierung mit den aktiven Elementen verzichtet wird. Somit kommen auch Vollextrudate aus einem Tonmineral/Zeolith-Verbund als Katalysator und/oder Adsorbens in Frage. Wünscht man den Einsatz von Metallfolien als Substrat, kann das aktive Material auch mittels einer washcoat-Technologie (Beschichtung) aufgetragen werden. Damit ist die Palette der Modifizierungsmöglichkeiten und/oder Herstellungsverfahren nicht erschöpft; auch Plasmagestützte Verfahren zur Beschichtung oder CVD (chemical vapour deposition), Imprägnierung, Tränken (wet precipitation) und weitere häufig im Einsatz befindliche und erprobte Methoden der Katalysatorpräparation können in beliebiger Kombination angewendet werden.

Einerseits ist es möglich, direkt natürlich vorkommende Mineralien (Zeolithe und Tonminerale) erfindungsgemäß zu verwenden, andererseits können synthetisch herstellbare Aluminosilicate mit genannter Struktur dazu Einsatz finden. Ihre Herstellung kann zumeist recht kostengünstig erfolgen, aufgrund geringer Synthesetemperaturen (<100°C, keine Autoklaventechnik), kurzer Synthesezeiten sowie dem Einsparen oder dem Verzicht teurer und umweltbelastender, organischer Templatmoleküle (zumeist Alkylammoniumsalze, wie TPABr/TPAOH) für die Herstellung. Die Vorteile natürlicher Minerale kommt insbesondere bei den Tonmineralien voll zum Tragen, da hier ein Synthese- und/oder Aufreinigungsprozeß in Vorbereitung auf das Delamellieren, Pillarn/Ionenaustauschen sehr zeitintensiv und kostenspielig ist.

Ein wie oben beschriebenes Verfahren und ein wie oben beschriebenes Abgassystem gemäß der vorliegenden Erfindung kann in allen Kraftfahrzeugen und Kraftfahrzeugtypen zum Einsatz kommen; hierbei spielt es keine Rolle, ob es sich z.B. um PKW oder LKW handelt oder ob Otto-, Diesel- oder CNG-Motoren zum Einsatz kommen. Auch Motoren, ausgerüstet mit modernsten Brennverfahren, wie HCCI (homogeneous charge compression ignition) oder CAI (controlled auto ignition) können von dieser Erfindung profitieren.

Die vorgenannten sowie die beanspruchten und in den Ausführungsbeispielen beschriebenen erfindungsgemäß zu verwendenden Bauteile unterliegen in ihrer Größe, Formgestaltung, Materialauswahl und technischen Konzeption keinen besonderen Ausnahmebedingungen, so dass die in dem Anwendungsgebiet bekannten Auswahlkriterien uneingeschränkt Anwendung finden können.

Weitere Einzelheiten, Merkmale und Vorteile des Gegenstandes der Erfindung ergeben sich aus den Unteransprüchen sowie aus der nachfolgenden Beschreibung der zugehörigen Zeichnung sowie des Diagrammes, in denen - beispielhaft - mehrere Ausführungsbeispiele des erfindungsgemäßen Abgassystems dargestellt sind. In den Zeichnungen zeigt:

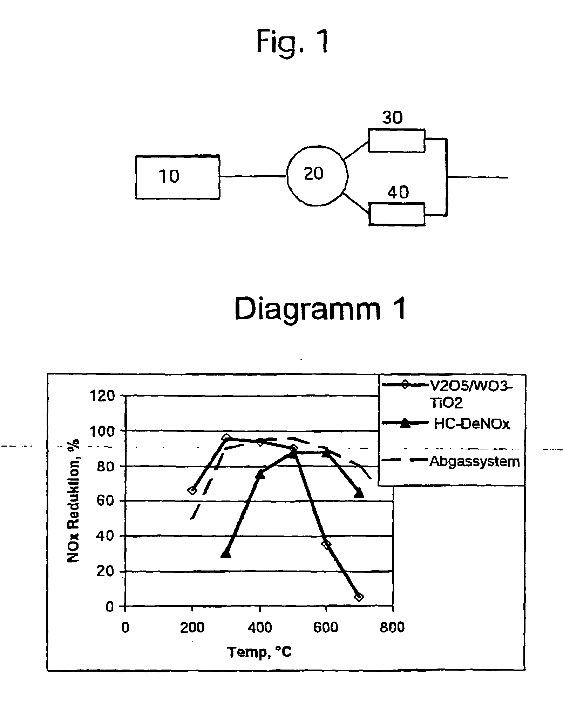

- Fig. 1: eine sehr schematische Zeichnung eines erfindungsgemäßen Abgassystems mit zwei Katalysatorbereichen.

Fig. 1 zeigt eine sehr schematische Zeichnung eines erfindungsgemäßen Abgassystems mit zwei Katalysatorbereichen. Vom Motor 10 werden die Abgase zur Steuereinheit 20 geführt. Diese führt die Abgase so den beiden Katalysatorbereichen 30 und 40, dass eine optimale Reduktionseffizienz auch über grosse Temperaturbereiche erreicht wird. Die Menge der Abgase, die den Katalysatorbereichen 30 und 40 zugeführt wird, wird z.B. nach der Temperatur des Abgases, der Betriebsweise des Motors oder nach einem festgelegten Zeitprogramm der Steuereinheit festgelegt.

Das Diagramm 1 zeigt die Effizienz eines Abgassystems gemäß der vorliegenden Erfindung, bei der zwei Katalysatoren bzw. katalytisch aktive Bereiche verwendet wurden. Das erste Katalysatorsystem ist auf der Basis des ternären Systems von V₂O₅/WO₃-TiO₂ aufgebaut, das zweite ist ein HC-DeNOx-System, welches auf Tonmineral bzw. Zeolithbasis basiert.

Wie dem Diagramm entnommen werden kann, hat das erste System das Temperaturoptimum an Reduktionseffizient zwischen 250 bis 300°C, während das zweite System etwa zwischen 450-550°C das Optimum erreicht. Das Abgassystem wurde nun so eingestellt/zusammengestellt, dass unterhalb von etwa 450°C die NOₓ-Reduktion mittels des V₂O₅/WO₃-TiO₂-Systems, oberhalb davon jedoch mittels des HC-DeNoₓ-Systems erfolgte. Wie dem Diagramm zu entnehmen ist, wurde somit eine Gesamteffizienz von deutlich über 80%, meist sogar mehr als 95% über den grossen, ausgedehnten Temperaturbereich von 250°C bis ca. 700°C erreicht.

## Patentansprüche

1. Abgassystem für die Reinigung von NOₓ im Abgasstrom von Brennkraftmaschinen, wobei die Brennkraftmaschine mit Luftüberschuss betrieben wird, wobei das Abgassystem sowohl in einem Temperaturbereich, der zur Reduktion von NOₓ unter Normalbedingungen geeignet ist, als auch in einem Temperaturbereich, der zur Reduktion unter DPF-Regenerationsbedingungen geeignet ist, eine Reduktionseffizienz von ≥ 50 % und ≤ 100 % aufweist, **dadurch gekennzeichnet, dass**
das Abgassystem
mindestens einen Katalysator und/oder einen katalytisch aktiven Bereich aufweist, welcher Vanadium enthält und ein Temperaturoptimum von ≥ 200 °C bis ≤ 600 °C besitzt, sowie
mindestens einen Katalysator und/oder einen katalytisch aktiven Bereich aufweist, welcher Tonminerale und/oder Zeolithe enthält und ein Temperaturoptimum von ≥ 400 °C bis ≤ 800 °C besitzt,
enthält.

2. Abgassystem nach Anspruch 1, **dadurch gekennzeichnet, dass** das Abgassystem im Wesentlichen über den gesamten Betriebstemperaturbereich von ≥ 350 °C bis ≤ 550 °C eine Reduktionseffizienz von ≥ 50 % und ≤ 100 % aufweist.

3. Abgassystem nach einem der Ansprüche 1 bis 2, **dadurch gekennzeichnet, dass** das Abgassystem eine Steuereinheit enthält, die abhängig von einer physikalischen Größe des Abgassystems und/oder des Kraftfahrzeugs den unterschiedlichen Katalysatoren und/oder katalytisch aktiven Bereichen des Abgassystems unterschiedliche Abgasmengen zuführt.

4. Abgassystem nach einem der Ansprüche 1 bis 3, **dadurch gekennzeichnet, dass** das Abgassystem eine Steuereinheit enthält, die abhängig von der Temperatur des Abgases und/oder der Betriebsweise des Motors den unterschiedlichen Katalysatoren und/oder katalytisch aktiven Bereichen des Abgassystems unterschiedliche Abgasmengen zuführt.

5. Abgassystem nach einem der Ansprüche 1 bis 4, **dadurch gekennzeichnet, dass** das Abgassystem mindestens einen Katalysator und/oder einen katalytisch aktiven Bereich enthält, der die Reduktion von NOₓ zu N₂ nach dem SCR-Verfahren katalysiert.

6. Abgassystem nach einem der Ansprüche 1 bis 5, **dadurch gekennzeichnet, dass** das Abgassystem mindestens einen Katalysator und/oder einen katalytisch aktiven Bereich enthält, der die Reduktion von NOₓ zu N₂ mit NH₃ und/oder Harnstoff oder Harnstoff generierenden Substanzen, vorzugsweise nach dem NH₃-SCR-Verfahren katalysiert.

7. Abgassystem nach einem der Ansprüche 1 bis 6, **dadurch gekennzeichnet, dass** das Abgassystem mindestens einen Katalysator und/oder einen katalytisch aktiven Bereich aufweist, welcher ≥ 1 Gew-% bis ≤ 5 Ges-%, vorzugsweise ≥ 2 Gew-% bis ≤ 4 Gew-% Vanadiumoxid enthält.

8. Abgassystem nach einem der Ansprüche 1 bis 7, **dadurch gekennzeichnet, dass** das Abgassystem mindestens einen Katalysator und/oder einen katalytisch aktiven Bereich aufweist, welcher ≥ 0 Gew-% bis ≤ 2 Gew-%, vorzugsweise ≥ 0,1 Gew-% bis ≤ 2 Gew-% Wolframoxid enthält.

9. Abgassystem nach einem der Ansprüche 1 bis 8, **dadurch gekennzeichnet, dass** das Abgassystem mindestens einen Katalysator und/oder einen katalytisch aktiven Bereich aufweist, welcher eine Zellenzahl (cpsi) von ≥ 150 bis ≤ 400 vorzugsweise ≥ 200 bis ≤ 300 aufweist.

10. Abgassystem nach einem der Ansprüche 1 bis 9, **dadurch gekennzeichnet, dass** das Abgassystem mindestens einen Katalysator und/oder einen katalytisch aktiven Bereich aufweist, welcher eine Flächengeschwindigkeit (m/h) von ≥ 50 bis ≤ 150 vorzugsweise ≥ 70 bis ≤ 130 aufweist.

11. Abgassystem nach einem der Ansprüche 1 bis 10, **dadurch gekennzeichnet, dass** das Abgassystem mindestens einen Katalysator und/oder einen katalytisch aktiven Bereich aufweist, welcher einen Monolithen mit einer Länge von ≥ 100 mm bis ≤ 300 mm vorzugsweise ≥ 150 mm bis ≤ 250 mm aufweist.

12. Abgassystem nach einem der Ansprüche 1 bis 11, **dadurch gekennzeichnet, dass** das Abgassystem mindestens einen Katalysator und/oder einen katalytisch aktiven Bereich aufweist, welcher einen Monolithen mit einer Querschnittsfläche mit einem Durchmesser von ≥ 4" bis ≤ 8" mm, vorzugsweise ≥ 5" bis ≤ 7" aufweist.

13. Abgassystem nach einem der Ansprüche 1 bis 12, **dadurch gekennzeichnet, dass** das Abgassystem mindestens einen Katalysator und/oder einen katalytisch aktiven Bereich aufweist, welcher Tonminerale ausgewählt aus der Gruppe, enthaltend Kaolinit, Ilerit, Kanemit, Magadiit, Smektite, Montmorillonit, Bentonit, Hectorit, Palygorskit und Sepiolith sowie Mischungen daraus, enthält.

14. Abgassystem nach einem der Ansprüche 1 bis 13, **dadurch gekennzeichnet, dass** das Abgassystem mindestens einen Katalysator und/oder einen katalytisch aktiven Bereich aufweist, welcher Zeolithe ausgewählt aus der Gruppe enthaltend natürlich vorkommenden, ionenausgetauschten und/oder synthetisierten Zeolith A, Zeolith X, Zeolith Y, Heulandit, Clinoptilolit, Chabasit, Erionit, Mordenit, Ferrierit, MFI (ZSM-5), Zeolith-Beta Faujasit, Mordenit oder Mischungen davon enthält.

15. Kraftfahrzeug umfassend ein Abgassystem nach einem der vorhergehenden Ansprüche.

## Claims

1. Exhaust gas system for the cleaning of NOₓ in the exhaust gas flow of internal-combustion engines, wherein the internal-combustion engine is operated with a lean mixture, wherein the exhaust gas system has a reduction efficiency of ≥ 50% and ≤ 100% both in a temperature range, which is suitable for the reduction of NOₓ under normal conditions and in a temperature range, which is suitable for reduction under DPF regeneration conditions, **characterised in that** the exhaust gas system has at least one catalyst and/or one catalytically active region, which contains vanadium and possesses a temperature optimum of ≥ 200°C to ≤ 600°C, and has at least one catalyst and/or one catalytically active region, which contains clay minerals and/or zeolites and possesses a temperature optimum of ≥ 400°C to ≤ 800°C.

2. Exhaust gas system according to claim 1, **characterised in that** the exhaust gas system has a reduction efficiency of ≥ 50% and ≤ 100% substantially over the entire operating temperature range of ≥ 350°C to ≤ 550°C.

3. Exhaust gas system according to either of claims 1 to 2, **characterised in that** the exhaust gas system contains a control unit, which supplies different exhaust gas quantities to the different catalysts and/or catalytically active regions of the exhaust gas system as a function of a physical variable of the exhaust gas system and/or of the motor vehicle.

4. Exhaust gas system according to any one of claims 1 to 3, **characterised in that** the exhaust gas system contains a control unit, which supplies different exhaust gas quantities to the different catalysts and/or catalytically active regions of the exhaust gas system as a function of the temperature of the exhaust gas and/or the operating mode of the engine.

5. Exhaust gas system according to any one of claims 1 to 4, **characterised in that** the exhaust gas system contains at least one catalyst and/or one catalytically active region, which catalyses the reduction of NOₓ to N₂ by the SCR method.

6. Exhaust gas system according to any one of claims 1 to 5, **characterised in that** the exhaust gas system contains at least one catalyst and/or one catalytically active region, which catalyses the reduction of NOₓ to N₂ with NH₃ and/or urea or substances generating urea, preferably by the NH₃-SCR method.

7. Exhaust gas system according to any one of claims 1 to 6, **characterised in that** the exhaust gas system has at least one catalyst and/or one catalytically active region, which contains ≥ 1 % by weight to ≤ 5 % by weight, preferably ≥ 2 % by weight to ≤ 4 % by weight vanadium oxide.

8. Exhaust gas system according to any one of claims 1 to 7, **characterised in that** the exhaust gas system has at least one catalyst and/or one catalytically active region, which contains ≥ 0 % by weight to ≤ 2 % by weight, preferably ≥ 0.1 % by weight to ≤ 2 % by weight tungsten oxide.

9. Exhaust gas system according to any one of claims 1 to 8, **characterised in that** the exhaust gas system has at least one catalyst and/or one catalytically active region, which has a cell density (cpsi) of ≥ 150 to ≤ 400, preferably ≥ 200 to ≤ 300.

10. Exhaust gas system according to any one of claims 1 to 9, **characterised in that** the exhaust gas system has at least one catalyst and/or one catalytically active region, which has an area velocity (m/h) of ≥ 50 to ≤ 150, preferably ≥ 70 to ≤ 130.

11. Exhaust gas system according to any one of claims 1 to 10, **characterised in that** the exhaust gas system has at least one catalyst and/or one catalytically active region, which has a monolith with a length of ≥ 100 mm to ≤ 300 mm, preferably ≥ 150 mm to ≤ 250 mm.

12. Exhaust gas system according to any one of claims 1 to 11, **characterised in that** the exhaust gas system has at least one catalyst and/or one catalytically active region, which has a monolith with a cross-sectional area with a diameter of ≥ 4" to ≤ 8" mm, preferably ≥ 5" to ≤ 7".

13. Exhaust gas system according to any one of claims 1 to 12, **characterised in that** the exhaust gas system has at least one catalyst and/or one catalytically active region, which contains clay minerals selected from the group containing kaolinite, ilerite, kanemite, magadiite, smectites, montmorillonite, bentonite, hectorite, palygorscite and sepiolite and mixtures thereof.

14. Exhaust gas system according to any one of claims 1 to 13, **characterised in that** the exhaust gas system has at least one catalyst and/or one catalytically active region, which contains zeolites selected from the group containing naturally occurring ion-exchanged and/or synthesised zeolite A, zeolite X, zeolite Y, heulandite, clinoptilolite, chabasite, erionite, mordenite, ferrierite, MFI (ZSM-5), zeolite-beta faujasite, mordenite or mixtures thereof.

15. Motor vehicle comprising an exhaust gas system according to any one of the preceding claims.

## Revendications

1. Système d'échappement pour l'élimination des NOₓ dans le flux des gaz brûlés des moteurs à combustion, le moteur à combustion étant exploité avec un excédent d'air, le système d'échappement présentant une efficacité de réduction ≥ 50 % et ≤ 100 % aussi bien dans une plage de température qui convient pour la réduction des NOₓ dans des conditions normales que dans une plage de température qui convient pour la réduction dans des conditions de régénération DPF, **caractérisé en ce que** le système d'échappement présente au moins un catalyseur et/ou une zone active au plan catalytique, qui contient du vanadium et présente un optimum de température ≥ 200°C jusqu'à ≤ 600°C, et au moins un catalyseur et/ou une zone active au plan catalytique qui contient des minéraux argileux et/ou des zéolithes et présente un optimum de température ≥ 400°C jusqu'à ≤ 800°C.

2. Système d'échappement selon la revendication 1, **caractérisé en ce que** le système d'échappement présente une efficacité de réduction ≥ 50 % et ≤ 100 % essentiellement sur l'ensemble de la plage de température de service ≥ 350°C et ≤ 550°C.

3. Système d'échappement selon l'une quelconque des revendications 1 à 2, **caractérisé en ce que** le système d'échappement contient une unité de commande qui amène différentes quantités de gaz brûlés aux différents catalyseurs et/ou zones actives au plan catalytique du système d'échappement en fonction d'une grandeur physique du système d'échappement et/ou du véhicule.

4. Système d'échappement selon l'une quelconque des revendications 1 à 3, **caractérisé en ce que** le système d'échappement contient une unité de commande qui amène différentes quantités de gaz brûlés aux différents catalyseurs et/ou zones actives au plan catalytique du système d'échappement en fonction de la température des gaz brûlés et/ou du mode de fonctionnement du moteur.

5. Système d'échappement selon l'une quelconque des revendications 1 à 4, **caractérisé en ce que** le système d'échappement contient au moins un catalyseur et/ou une zone active au plan catalytique, qui catalyse la réduction de NOₓ en N₂ selon le procédé SCR.

6. Système d'échappement selon l'une quelconque des revendications 1 à 5, **caractérisé en ce que** le système d'échappement contient au moins un catalyseur et/ou une zone active au plan catalytique, qui catalyse la réduction de NOₓ en N₂ avec NH₃ et/ou d'urée ou de substances générant de l'urée, de préférence selon le procédé NH₃-SCR.

7. Système d'échappement selon l'une quelconque des revendications 1 à 6, **caractérisé en ce que** le système d'échappement contient au moins un catalyseur et/ou une zone active au plan catalytique, qui contient un pourcentage en poids ≥ 1 jusqu'à un pourcentage en poids ≤ 5, de préférence un pourcentage en poids ≥ 2 jusqu'à un pourcentage en poids ≤ 4 d'oxyde de vanadium.

8. Système d'échappement selon l'une quelconque des revendications 1 à 7, **caractérisé en ce que** le système d'échappement présente au moins un catalyseur et/ou une zone active au plan catalytique, qui contient un pourcentage en poids ≥ 0 jusqu'à un pourcentage en poids ≤ 2, de préférence un pourcentage en poids ≥ 0,1 jusqu'à un pourcentage en poids ≤ 2 d'oxyde de tungstène.

9. Système d'échappement selon l'une quelconque des revendications 1 à 8, **caractérisé en ce que** le système d'échappement contient au moins un catalyseur et/ou une zone active au plan catalytique, qui présente un nombre de cellules (cpsi) ≥ 150 jusqu'à ≤ 400, de préférence ≥ 200 jusqu'à ≤ 300.

10. Système d'échappement selon l'une quelconque des revendications 1 à 9, **caractérisé en ce que** le système d'échappement présente au moins un catalyseur et/ou une zone active au plan catalytique, qui présente une vitesse de surface (m/h) ≥ 50 jusqu'à ≤ 150, de préférence ≥ 70 jusqu'à ≤ 130.

11. Système d'échappement selon l'une quelconque des revendications 1 à 10, **caractérisé en ce que** le système d'échappement présente au moins un catalyseur et/ou une zone active au plan catalytique, qui présente un monolithe d'une longueur ≥100 mm jusqu'à ≤ 300 mm, de préférence ≥ 150 mm jusqu'à ≤ 250 mm.

12. Système d'échappement selon l'une quelconque des revendications 1 à 11, **caractérisé en ce que** le système d'échappement contient au moins un catalyseur et/ou une zone active au plan catalytique, qui présente un monolithe avec une surface de section d'un diamètre ≥ 4" jusqu'à ≤ 8" mm, de préférence ≥ 5" jusqu'à ≤ 7".

13. Système d'échappement selon l'une quelconque des revendications 1 à 12, **caractérisé en ce que** le système d'échappement contient au moins un catalyseur et/ou une zone active au plan catalytique, qui contient des minéraux argileux sélectionnés dans le groupe contenant les éléments suivants : kaolinite, ilérite, kanémite, magadiite, smectite, montmorillonite, bentonite, hectorite, palygorskite et sépiolite et des mélanges de ces éléments.

14. Système d'échappement selon l'une quelconque des revendications 1 à 13, **caractérisé en ce que** le système d'échappement présente au moins un catalyseur et/ou une zone active au plan catalytique, qui contient des zéolithes sélectionnées parmi le groupe contenant des éléments se déformant naturellement, échangés par des ions et/ou synthétisés : zéolithe A, zéolithe X, zéolithe Y, heulandite, clinoptilolite, chabazite, érionite, mordénite, ferriérite, MFI (ZSM-5), zéolithe-beta faujasite, mordénite ou des mélanges de ces éléments.

15. Véhicule comprenant un système d'échappement selon l'une quelconque des revendications précédentes.
